# EUROPÄISCHE PATENTSCHRIFT

(11) **EP 3 392 409 B1**
(45) Veröffentlichungstag und Bekanntmachung des Hinweises auf die Patenterteilung: **30.06.2021**
(21) Anmeldenummer: 18173285.0
(22) Anmeldetag: 05.11.2013
(51) Int. Cl.: E01H 1/05

(54) **KEHRMASCHINE ZUM BEARBEITEN VON BODENFLÄCHEN, INSBESONDERE RASENFLÄCHEN**
SWEEPING MACHINE FOR TREATING GROUND SURFACES, IN PARTICULAR LAWN
BALAYEUSE DESTINÉE À TRAITER DES SURFACES DE SOL, EN PARTICULIER DES SURFACES DE GAZON

(30) Priorität: 05.11.2012 DE 202012010494 U
(43) Veröffentlichungstag der Anmeldung: 24.10.2018
(62) Teilanmeldung aus: 13791770.4
(73) Patentinhaber: Redexim Handel- En Exploitatie Maatschappij B.V., 3702 AC Zeist (NL)
(72) Erfinder: de Bree, Cornelius Hermanus Maria, 3971 Driebergen (NL)
(74) Vertreter: dompatent von Kreisler Selting Werner - Partnerschaft von Patent- und Rechtsanwälten mbB

(56) Entgegenhaltungen:
- US-A- 220 252
- US-A- 445 219
- US-A- 612 632

## Beschreibung

Die Erfindung betrifft eine Kehrmaschine zum Bearbeiten von Bodenflächen nach dem Oberbegriff des Anspruch 1, sowie ein Verfahren zum Kehren von Bodenflächen. Eine Kehrmaschine mit den Merkmalen des Oberbegriffs des Anspruchs 1 ist in US 220 252 A beschrieben.

Es sind Kehrmaschinen zum Bearbeiten von Bodenflächen bekannt, die einen in Fahrtrichtung bewegbaren Maschinenrahmen aufweisen, in dem zumindest eine Radachse mit mindestens einem Rad quer zur Fahrtrichtung gelagert ist, die den Maschinenrahmen parallel zur Bodenfläche trägt. Die Kehrmaschine weist mindestens ein um eine Kehrelementachse rotierend antreibbares Kehrelement auf, wobei die Kehrelementachse parallel zur Bodenfläche verläuft und das Kehrelement in einer Betriebsstellung mit der Bodenfläche im Eingriff ist.

Ferner liegt der vorliegenden Erfindung die Aufgabe zugrunde, eine Kehrmaschine zu schaffen, die kostengünstig und einfach herstellbar ist, wobei das Kehrelement der Kehrmaschine nur bei Bodenkontakt angetrieben wird.

Zur Lösung dieser Aufgabe dienen die Merkmale der Ansprüche 1 und 7.

Gemäß der vorliegenden Erfindung ist eine Kehrmaschine vorgesehen, wobei das Kehrelement in Betriebsstellung im Eingriff mit dem Boden ist und den Boden kehrt, wobei in Betriebsstellung die Kehrelementachse mit der Radachse gekoppelt ist, so dass das Kehrelement durch die Drehung der Radachse antreibbar ist, wobei zumindest zwei Kehrelemente vorgesehen sind, wobei die Kehrelemente in eine Transportstellung verschwenkbar sind, in der die Kehrelemente den Boden nicht berühren, wobei in der Transportstellung die Radachse und die Kehrelementachsen voneinander entkoppelt sind, so dass die Kehrelemente in Transportstellung nicht angetrieben ist.

Durch das Verschwenken des Kehrelementes von der Betriebsstellung in die Transportstellung sind die Radachse und die Kehrelementachse voneinander entkoppelt.

Durch das Verschwenken des Kehrelementes von der Transportstellung in die Betriebsstellung können die Radachse und die Kehrelementachse miteinander koppelbar sein.

Die Radachse und die Kehrelementachse können über ein Getriebe, insbesondere über ein Riemenantrieb oder ein Kettenantrieb, miteinander koppelbar sein.

Es ist eine Kupplung vorgesehen, die die Radachse von der Kehrelementachse entkoppelt.

Die Kupplung kann mittels eines Seilzuges beim Verschwenken von der Betriebsstellung in die Transportstellung oder umgekehrt betätigbar sein.

Ferner kann gemäß der vorliegenden Erfindung ein weiteres Verfahren zum Kehren von Bodenflächen, insbesondere Rasenflächen, vorgesehen sein, wobei eine Kehrmaschine mit einem Fahrzeug in Fahrtrichtung bewegt wird, wobei die Kehrmaschine von mindestens einem Rad auf eine quer zur Fahrtrichtung verlaufenden Radachse der Kehrmaschine getragen wird und die Bodenfläche mit mindestens zwei im Wesentlichen parallel zur Radachse verlaufenden um jeweils eine Kehrelementache rotierend angetriebenen Kehrelemente gekehrt wird, wobei die Kehrelementachsen in einer Betriebsstellung, in der die Kehrelemente im Eingriff mit dem Boden sind, mit der Radachse gekoppelt sind und durch Drehung der Radachse angetrieben werden. Bei dem Verfahren kann in vorteilhafterweise vorgesehen sein, dass das Kehrelemente von einer Betriebsstellung in einer Transportstellung, in der die Kehrelemente den Boden nicht berührt, verschwenkt werden, wobei durch das Verschwenken in die Transportstellung die Radachse und die Kehrelementachsen voneinander entkoppelt werden, so dass das Kehrelemente in der Transportstellung nicht angetrieben werden.

Beim Verschwenken des Kehrelementes von der Transportstellung in eine Betriebsstellung werden durch das Verschwenken die Radachse und die Kehrelementachsen miteinander gekoppelt.

Die Kehrelementachse des mindestens einen Kehrelements kann von einer ersten Betriebsstellung bei Geradeausfahrt in eine zweite Betriebsstellung bei Kurvenfahrt überführbar sein, in der die Kehrelementachse gegenüber der erste Betriebsstellung eine zur Kurveninnenseite hin verschwenkte Lage aufweist.

Dies hat den Vorteil, dass verhindert wird, dass das zu kehrenden Gut z. B. durch Zentrifugalkräfte zur Kurvenaußenseite hin transportiert wird und aus der Kehrmaschine heraus transportiert wird.

Die Kehrelementachse kann um eine im Wesentlichen vertikale Schwenkachse von der ersten Betriebsstellung in die zweite Betriebsstellung verschwenkbar sein.

Das Kehrelement kann eine Bürstenwalze, vorzugsweise eine Rundbürstenwalze sein.

Die vertikale Schwenkachse kann durch eine Lagerstelle an einem der freien Enden der Kehrelementachse verlaufen.

Es kann eine einzige Radachse vorgesehen sein, die im Maschinenrahmen gelagert ist.

Die mindestens eine Radachse kann das mindestens eine Kehrelement und/oder ein Getriebe antreiben.

Der Maschinenrahmen kann eine Ankopplungsvorrichtung für ein Zugfahrzeug aufweisen.

Es sind zwei Kehrelemente vorgesehen, wobei ein Kehrelement in Fahrtrichtung vor der Radachse und ein Kehrelement in Fahrtrichtung hinter der Radachse angeordnet ist.

Die Kehrelementachse des mindestens einen Kehrelements kann in der ersten Betriebsstellung parallel zu der mindestens einen Radachse angeordnet sein.

In der zweiten Betriebsstellung ist die Kehrelementachse vorzugsweise nicht parallel zu der Radachse angeordnet.

Die Kehrelementachse des mindestens einen Kehrelements kann im Wesentlichen in einer zur Bodenfläche parallelen Ebene verschwenkbar sein.

Die Kehrelementachse des mindestens einen Kehrelementes kann ein erstes und zweites gelagertes Ende aufweisen, wobei zum Verschwenken der Kehrelementachse zumindest ein Ende relativ zu dem Maschinenrahmen über eine Einstelleinrichtung verstellbar ist.

Die Einstelleinrichtung kann manuell und/oder pneumatisch und/oder hydraulisch betätigbar sein.

Bei Kurvenfahrt kann das äußere Ende des mindestens einen Kehrelements in Bezug zu dem Rahmen in Fahrtrichtung nach vorne und/oder das kurveninnere Ende des mindestens einen Kehrelementes in Bezug zu dem Rahmen nach hinten verstellbar sein.

Die Einstelleinrichtung für die mindestens eine Kehrelementachse kann in Abhängigkeit von dem Lenkeinschlag des Zugfahrzeugs oder einem Kurvenfahrtdetektorsignal eines Detektors an dem Maschinenrahmen automatisch ansteuerbar sein.

Die mindestens eine Kehrelementachse kann in einem inneren Rahmenelement des Maschinenrahmens gelagert sein, das relativ zu dem Maschinenrahmen derart höhenverstellbar ist, dass das Kehrelement in einer Transportstellung überführbar ist, in der das Kehrelement außer Eingriff mit der Bodenfläche ist.

Das innere Rahmenelement kann relativ zum Maschinenrahmen um eine zu der Radachse parallelen Achse oder um die Radachse verschwenkbar sein.

Das mindestens eine Kehrelement kann in der Betriebsstellung über ein Getriebe, insbesondere ein Riemenantrieb oder ein Kettengetriebe, mit der Radachse antriebsmäßig gekoppelt sein und in der Transportstellung zum Beispiel über eine Kupplung von der Radachse entkoppelbar sein.

Die Erfindung sieht ferner in vorteilhafterweise bei einem Verfahren zum Kehren von Bodenflächen, insbesondere Rasenflächen folgende Merkmale vorgesehen: eine Kehrmaschine kann mit einem Fahrzeug in Fahrtrichtung bewegt werden, wobei die Kehrmaschine von mindestens einem Rad auf einer quer zur Fahrtrichtung verlaufenden Radachse der Kehrmaschine getragen wird, und die Bodenoberfläche mit mindestens einem im Wesentlichen parallel zur Radachse verlaufenden, um eine Kehrelementachse rotierend angetriebenen Kehrelement gekehrt wird. Das Kehrelement wird von einer ersten Betriebsstellung für Geradeausfahrt, in der sich die Kehrelementachse des Kehrelements in einer im Wesentlichen orthogonalen Lage zur Fahrtrichtung befindet, in eine zweite Betriebsstellung für Kurvenfahrt verschwenkt, in der die Kehrelementachse des Kehrelements in eine zur Kurveninnenseite hin verschwenkte Lage überführt wird.

Im Folgenden wird unter Bezugnahme auf die Zeichnungen ein Ausführungsbeispiel der Erfindung näher erläutert.

Es zeigen schematisch:
- Fig. 1: eine Kehrmaschine in der Seitenansicht,
- Fig. 2: die Kehrmaschine aus Fig. 1 in der Transportstellung,
- Fig. 3: die Kehrmaschine in Draufsicht,
- Fig. 4: die Kehrmaschine in der zweiten Betriebsstellung,
- Fig. 5: den Maschinenrahmen der Kehrmaschine,
- Fig. 6: den Maschinenrahmen der Kehrmaschine in Transportstellung,
- Fig. 7: eine hydraulische Einstelleinrichtung zum Verschwenken des Kehrelementes von der ersten in die zweite Betriebsstellung,
- Fig. 8: eine elektrische Einstelleinrichtung,
- Fig. 9: eine manuelle Einstelleinrichtung.

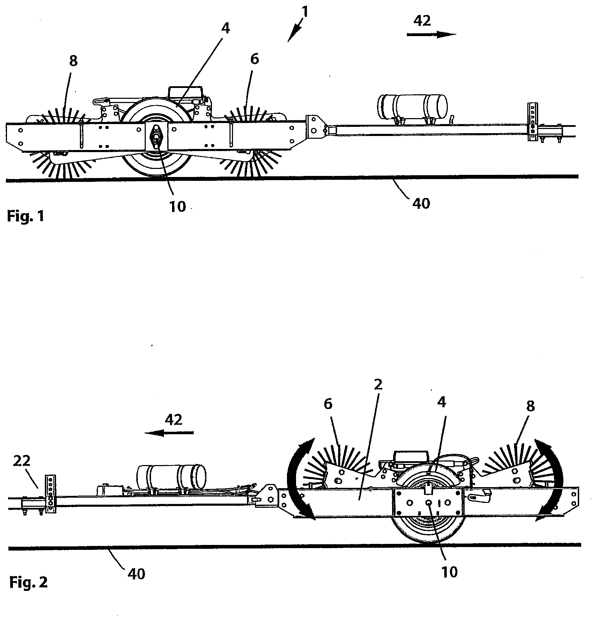

Fig. 1 zeigt eine Kehrmaschine 1 zum Bearbeiten einer Bodenfläche 40. Die Kehrmaschine 1 kann mit Hilfe eines nicht dargestellten Zugfahrzeugs in Fahrtrichtung 42 gezogen werden. Es ist eine Ankopplungsvorrichtung 22 für das Zugfahrzeug vorgesehen.

Die dargestellte Kehrmaschine weist einen Maschinenrahmen 2 auf, der mit Hilfe des Zugfahrzeugs in Fahrtrichtung 42 bewegbar ist. In dem Maschinenrahmen 2 ist eine Radachse 10 mit zwei Rädern 4 gelagert. Die Radachse 10 verläuft im Wesentlichen parallel zu der Bodenfläche 40. Die Radachse 10 trägt den Maschinenrahmen 2 im Wesentlichen parallel zur Bodenfläche 40. Beim Bewegen der Kehrmaschine in Fahrtrichtung 42 werden die Räder 4 gedreht. Durch Drehen der Räder 4 wird die Radachse 10 angetrieben.

Die Kehrmaschine weist vorzugsweise zwei um jeweils eine Kehrelementachse 12, 14 rotierend antreibbare Kehrelemente 6, 8 auf. Die Kehrelemente 6, 8 sind Bürstenwalzen. Die Kehrelementachsen 12, 14 verlaufen im Wesentlichen parallel zur Bodenfläche 40. In Fig. 1 sind die Kehrelemente in einer Betriebsstellung dargestellt, in der die Kehrelemente 6, 8 im Eingriff mit der Bodenfläche 40 sind und die Bodenfläche 40 kehren. Die Kehrelemente 6, 8 rotieren vorzugsweise entgegen der Drehrichtung der Räder 4. Alternativ können die Kehrelemente 6, 8 aber auch in derselben Richtung rotieren wie die Räder 4.

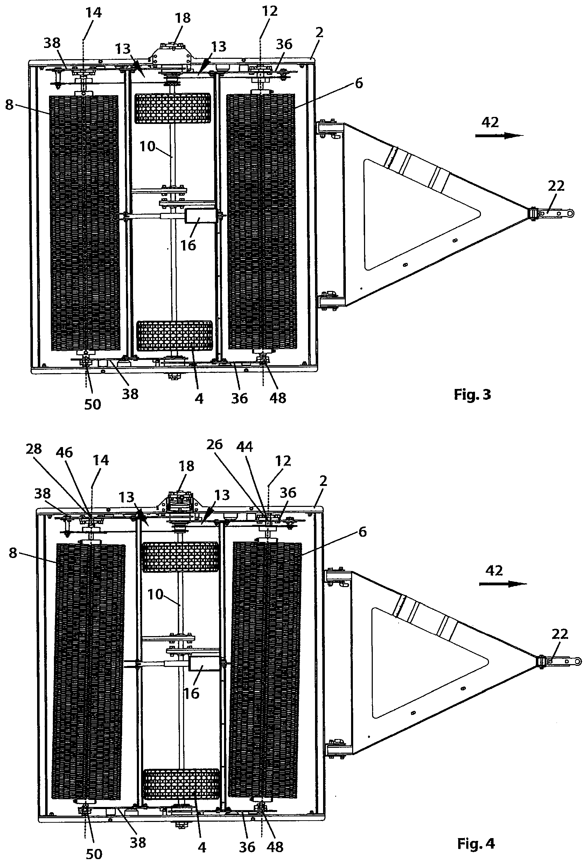

In der Betriebsstellung sind die Kehrelementachsen 6 und 8 mit der Radachse 10 gekoppelt. Dies ist in Fig. 3 dargestellt. Die Kopplung kann im dargestellten Fall über Getriebe 13, vorzugsweise Kettengetriebe oder Riemenantriebe, erfolgen. Im dargestellten Ausführungsbeispiel sind die Getriebe 13 Kettengetriebe. Durch Drehung der Radachse 10 und der Räder 4 können die Kehrelementachsen 12, 14 und somit die Kehrelemente 6 und 8 angetrieben werden.

Die Kehrelemente 6 und 8 sind mittels des Kolben-Zylinderelements 16 in eine Transportstellung verschwenkbar. Die Kehrelemente 6 und 8 in der Transportstellung sind in Fig. 2 dargestellt. In der Transportstellung berühren die Kehrelemente 6 und 8 die Bodenfläche 40 nicht und die Radachse 10 und die Kehrelementachsen 12 und 14 sind in der Transportstellung voneinander entkoppelt, so dass die Kehrelemente 6 und 8 in der Transportstellung nicht angetrieben sind. Durch das Verschwenken der Kehrelemente 6, 8 von der Betriebsstellung in die Transportstellung werden die Radachse 10 und die Kehrelementachsen 12, 14 voneinander entkoppelt. Dies geschieht mittels der Kupplung 18.

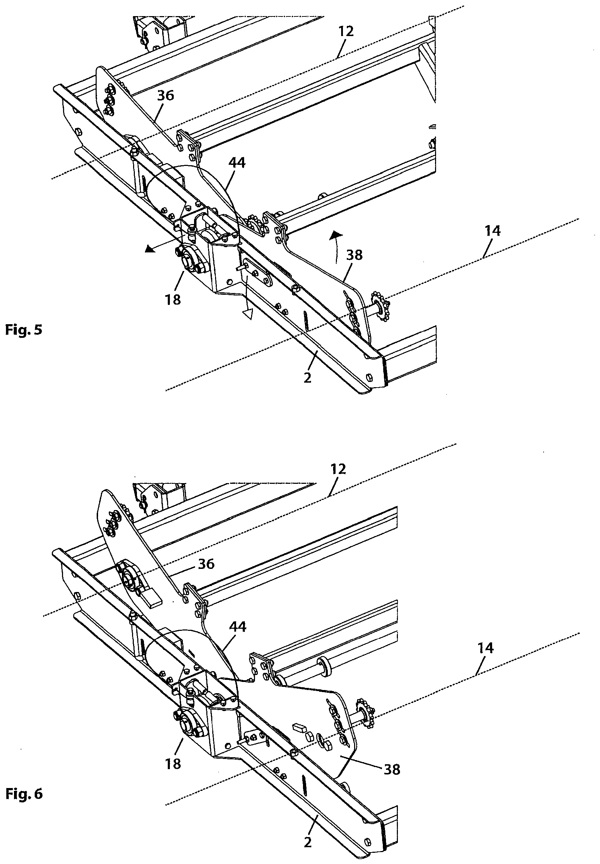

Das Verschwenken von der Betriebsstellung in die Transportstellung und das Entkoppeln kann i. V. m. Fig. 5 und 6 beschrieben werden. In Fig. 5 und 6 ist lediglich ein Teil des Maschinenrahmes 2 dargestellt. Der Maschinenrahmen 2 weist innere Rahmenelemente 36, 38 auf. Die Kehrelemente 6, 8 sind über die Kehrelementachsen 12, 14 jeweils beidseitig in einem der inneren Rahmenelemente 36, 38 gelagert. Die inneren Rahmenelemente 36, 38 sind an beiden Enden der Kehrelementachsen 12, 14 angeordnet. Die inneren Rahmenelemente 36, 38 können um eine Schwenkachse, die parallel zu der Radachse verläuft oder um die Radachse 10 verschwenkt werden.

Beim Verschwenken der inneren Rahmenelemente 36, 38 kann wie im dargestellten Ausführungsbeispiel ein Seilzugelement 44 betätigt werden, das wiederum die Kupplung 18 betätigt und die Radachse 10 von den Kehrelementachsen 12, 14 entkoppelt. Beim Verschwenken, d. h. beim Hochschwenken, von der Betriebsstellung in die Transportstellung wird über die Kupplung 18 die Radachse 10 von den Kehrelementachsen 12, 14 entkoppelt. Beim Verschwenken von der Transportstellung in die Betriebsstellung, d. h. beim Herabschwenken, wird über die Kupplung 18 die Radachse 10 wieder mit den Kehrelementachsen 12, 14 gekoppelt. Dies bedeutet, dass die Kehrelemente 6, 8 in der Transportstellung nicht angetrieben werden, wohingegen sie in der Betriebsstellung, in den die Kehrelemente 6, 8 die Bodenfläche 40 kehren, von der Radachse 10 angetrieben werden.

In Fig. 3 ist die Kehrmaschine 1 in der Draufsicht dargestellt. In Fig. 3 ist die Kehrmaschine in einer ersten Betriebsstellung dargestellt. In dieser ersten Betriebsstellung sind die Kehrelementachsen 12 und 14 parallel zu der Radachse 10 angeordnet und bei Geradeausfahrt orthogonal zu der Fahrtrichtung 42 angeordnet.

Die Kehrelementachsen 12, 14 der Kehrelemente 6, 8 können bei Kurvenfahrt in eine zweite Betriebsstellung in eine zur Kurveninnenseite hin verschwenkte Lage überführt werden. Die zweite Betriebsstellung ist in Fig. 4 dargestellt. Die Kehrelementachsen 12, 14 sind in eine zur Kurveninnenseite hin verschwenkte Lage überführt. Die Kurvenfahrtrichtung ist mit den Bezugszeichen 24 angegeben. Die Kehrelementachsen werden vorzugsweise um eine in Wesentliche vertikale Schwenkachse von der ersten Betriebsstellung in die zweite Betriebsstellung verschwenkt.

Die Kehrelementachsen 12, 14 weisen jeweils ein erstes Ende 44, 46 und jeweils ein zweites Ende 48, 50 auf, die in den inneren Rahmenelementen 36, 38 des Maschinenrahmens 2 gelagert sind. Dass die Kehrelementachsen 12, 14 zur Kurveninnenseite hin verschwenkt sind, bedeutet, dass die Kehrelemente 6, 8 in Kurvenrichtung stärker eingeschlagen sind. Dies bedeutet, dass das kurvenäußere Ende in Fahrtrichtung nach vorne und/oder das kurveninnere Ende in Fahrtrichtung nach hinten verschwenkt ist.

Die Kehrelementachsen 12, 14 der Kehrelemente 6, 8 können zum Verschwenken der Kehrelementachsen 12, 14 an dem ersten Ende 44, 46 und/oder an einem zweiten Ende 48, 50 relativ zu dem Maschinenrahmen 2 über eine Einstelleinrichtung verstellbar sein. Im dargestellten Ausführungsbeispiel werden die Kehrelementachsen 12, 14 an den jeweiligen zweiten Ende 48, 50 in Bezug zu dem Maschinenrahmen 2 in den inneren Rahmenelementen 36, 38 verstellt, so dass die Kehrelemente 6, 8 um eine Schwenkachse 26, 28, die jeweils in dem ersten Ende 44, 46 verlaufen, verschwenkt werden. Die Schwenkachsen 26, 28 verlaufen vorzugsweise im Wesentlichen vertikal, d. h. im Wesentlichen orthogonal zu der Bodenfläche 40.

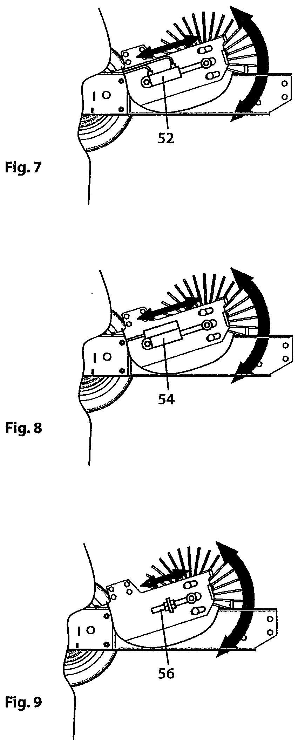

In Fig. 7 bis 9 sind unterschiedliche Einstelleinrichtungen 52, 54, 56 zum Verschwenken der Kehrelementsachsen 12, 14 dargestellt. In Fig. 7 ist eine hydraulische Einstelleinrichtung 52 dargestellt. In Fig. 8 ist eine elektrische Einstelleinrichtung dargestellt und in Fig. 9 ist eine manuelle Einstelleinrichtung dargestellt.

Die Kehrelemente 6 und 8 können bei Kurvenfahrt von der ersten Betriebsstellung in die zweite Betriebsstellung überführt werden. Alternativ können die Kehrelemente 6, 8 auch von der ersten Betriebsstellung zunächst in die Transportstellung überführt werden. Dann können die Einstelleinrichtungen 52, 54, 56 betätigt werden und die Kehrelementachsen 12, 14 können in Bezug zu den Rahmenelementen 36, 38 des Maschinenrahmens 2 verstellt werden. Die Kehrelemente 6, 8 können dann wieder in die Betriebsstellung abgelassen werden, wobei durch das Verstellen der Kehrelementachsen 12, 14 die Kehrelemente 6, 8 beim Herablassen in die zweite Betriebsstellung überführt werden, wobei die Kehrelemente 6, 8 eine zur Kurveninnenseite hin verschwenkte Lage aufweisen.

## Patentansprüche

1. Kehrmaschine, die von einem Zugfahrzeug ziehbar ist, zum Kehren eines Bodens, mit
- einem Maschinenrahmen (2),
- mindestens zwei um zumindest eine Radachse (10) rotierbare Räder,
- mindestens einem um eine Kehrelementachse rotierbaren Kehrelement, (6) wobei das Kehrelement in Betriebsstellung im Eingriff mit dem Boden ist und den Boden kehrt, wobei in Betriebsstellung die Kehrelementsachse mit der Radachse gekoppelt ist, so dass das Kehrelement durch die Drehung der Radachse antreibbar ist,
**dadurch gekennzeichnet,**
**dass** zumindest zwei Kehrelemente (6, 8) vorgesehen sind, wobei ein Kehrelement in Fahrtrichtung vor der Radachse (10) und ein Kehrelement in Fahrtrichtung hinter der Radachse (10) angeordnet ist, wobei die Kehrelemente in eine Transportstellung verschwenkbar sind, in der die Kehrelemente den Boden nicht berührt, wobei in der Transportstellung die Radachse und die Kehrelementsachsen voneinander entkoppelt sind, so dass das Kehrelemente in Transportstellung nicht angetrieben sind, wobei durch das Verschwenken der Kehrelemente von der Betriebsstellung in die Transportstellung die Radachse und die Kehrelementachsen voneinander entkoppelbar sind, wobei eine Kupplung (18) vorgesehen ist, die die Radachse von den Kehrelementachsen entkoppelt.

2. Kehrmaschine nach Anspruch 1, **dadurch gekennzeichnet, dass** durch das Verschwenken der Kehrelemente von der Transportstellung in die Betriebsstellung die Radachse und die Kehrelementsachsen miteinander koppelbar sind.

3. Kehrmaschine nach einem der Ansprüche 1 bis 2, **dadurch gekennzeichnet, dass** die Radachse und die Kehrelementsachsen über ein Getriebe, insbesondere über einen Riemenantrieb oder einen Kettenantrieb, miteinander koppelbar sind.

4. Kehrmaschine nach einem der Ansprüche 1 bis 3, **dadurch gekennzeichnet, dass** die mindestens eine Kehrelementachse in einem inneren Rahmenelement des Maschinenrahmens gelagert ist, das relativ zu dem Maschinenrahmen derart höhenverstellbar ist, dass das Kehrelement in eine Transportstellung überführbar ist, in der das Kehrelement außer Eingriff mit der Bodenfläche ist.

5. Kehrmaschine nach Anspruch 4, **dadurch gekennzeichnet, dass** das innere Rahmenelement relativ zum Maschinenrahmen um eine zu der Radachse parallele Achse oder um die Radachse verschwenkbar sein.

6. Kehrmaschine nach einem der Ansprüche 1 bis 5, **dadurch gekennzeichnet, dass** das mindestens eine Kehrelement in der Betriebsstellung über ein Getriebe, insbesondere ein Riemenantrieb oder ein Kettengetriebe, mit der Radachse antriebsmäßig gekoppelt ist.

7. Verfahren zum Kehren von Bodenflächen, insbesondere Rasenflächen, wobei
- eine Kehrmaschine mit einem Fahrzeug in Fahrtrichtung bewegt wird, wobei
- die Kehrmaschine von mindestens einem Rad auf eine quer zur Fahrtrichtung verlaufenden Radachse der Kehrmaschine getragen wird und die Bodenfläche mit mindestens zwei im Wesentlichen parallel zur Radachse verlaufenden um jeweils eine Kehrelementache rotierend angetriebenen Kehrelemente gekehrt wird, wobei ein Kehrelement in Fahrtrichtung vor der Radachse und ein Kehrelement in Fahrtrichtung hinter der Radachse angeordnet ist wobei
- die Kehrelementachsen in einer Betriebsstellung, in der die Kehrelemente im Eingriff mit dem Boden sind, mit der Radachse gekoppelt sind und durch Drehung der Radachse angetrieben werden, wobei die Kehrelemente von einer Betriebsstellung in eine Transportstellung, in der die Kehrelemente den Boden nicht berührt, verschwenkt werden, wobei durch das Verschwenken in die Transportstellung die Radachse und die Kehrelementachsen über eine Kupplung (18) voneinander entkoppelt werden, so dass die Kehrelemente in der Transportstellung nicht angetrieben werden.

8. Verfahren nach Anspruch 7, **dadurch gekennzeichnet, dass** durch das Verschwenken des Kehrelements von der Transportstellung in die Betriebsstellung die Radachse und die Kehrelementsachse miteinander gekoppelt werden.

## Claims

1. A sweeping machine adapted to be pulled by a towing vehicle, for sweeping a ground, comprising
- a machine frame (2),
- at least two wheels adapted to rotate about at least one wheel axle (10),
- at least one sweeping element (6) adapted to rotate about a sweeping element axis, the sweeping element being in contact with the ground, when in its operating position, and sweeps the ground, the sweeping element axis in the operating position being coupled with the wheel axle so that the sweeping element can be driven by the rotation of the wheel axle,
**characterized in**
**that** at least two sweeping elements (6, 8) are provided, one sweeping element being arranged ahead of the wheel axle (10) and one sweeping element being arranged behind the wheel axle (10), seen in the traveling direction, the sweeping elements being adapted to be pivoted to a transport position in which the sweeping elements do not contact the ground, the wheel axle and the sweeping element axes being decoupled from each other in the transport position so that the sweeping elements are not driven in the transport position, the wheel axle and the sweeping element axes being adapted to be decoupled from each other by pivoting the sweeping elements from the operating position to the transport position, a coupling (18) being provided that decouples the wheel axle from the sweeping element axes.

2. The sweeping machine of claim 1, **characterized in that** the wheel axle and the sweeping element axes are adapted to be coupled with each other by pivoting the sweeping elements from the transport position to the operating position.

3. The sweeping machine of one of claims 1 to 2, **characterized in that** the wheel axle and the sweeping element axes are adapted to be coupled via a transmission, in particular a belt drive or a chain drive.

4. The sweeping machine of one of claims 1 to 3, **characterized in that** the at least one sweeping element axis is supported in an inner frame element of the machine frame, which is vertically adjustable with respect to the machine frame such that the sweeping element can be moved to a transport position in which the sweeping element is not in contact with the ground surface.

5. The sweeping machine of one of claims 4, **characterized in that** the inner frame element is adapted to be pivoted relative to the machine frame about an axis parallel to the wheel axle or about the wheel axle.

6. The sweeping machine of one of claims 1 to 5, **characterized in that** the at least one sweeping element, when in the operating position, is drivingly coupled with the wheel axle via a transmission, in particular a belt drive or a chain drive.

7. A method for sweeping ground surfaces, in particular lawns, wherein
- a vehicle moves a sweeping machine in the traveling direction, wherein
- the sweeping machine is supported by at least one wheel on a wheel axle of the sweeping machine that extends transversely to the traveling direction, and wherein the ground surface is swept with at least two sweeping elements extending substantially parallel to the wheel axle and driven to rotate about a sweeping element axis, respectively, and one sweeping element being arranged ahead of the wheel axle and one sweeping element being arranged behind the wheel axle, seen in the traveling direction, wherein
- in an operating position in which the sweeping elements are in contact with the ground, the sweeping element axes are coupled with the wheel axle and are driven by rotation of the wheel axle, the sweeping elements being pivoted from an operating position to a transport position in which the sweeping element does not contact the ground, the pivoting to the transport position causing the wheel axle and the sweeping element axes to become decoupled from each other via a coupling (18) so that the sweeping elements are not driven in the transport position.

8. Method of claim 7, **characterized in that** the wheel axle and the sweeping element axis are coupled with each other by pivoting the sweeping element from the transport position to the operating position.

## Revendications

1. Balayeuse pouvant être tirée par un véhicule tracteur, destinée à balayer un sol, dotée
- d'un cadre (2),
- d'au moins deux roues pouvant tourner autour d'au moins un essieu de roues (10),
- d'au moins un élément de balayage (6) pouvant tourner autour d'un axe d'élément de balayage, dans laquelle l'élément de balayage en position de fonctionnement est en contact avec le sol et balaye le sol, dans laquelle en position de fonctionnement l'axe d'élément de balayage est couplé à l'essieu de roues, de sorte que l'élément de balayage peut être entraîné par la rotation de l'essieu de roues,
**caractérisée en ce qu'**au moins deux éléments de balayage (6, 8) sont prévus, dans laquelle un élément de balayage est disposé devant l'essieu de roues (10) dans la direction de déplacement et un élément de balayage est disposé derrière l'essieu de roues (10) dans la direction de déplacement,
dans laquelle les éléments de balayage peuvent pivoter dans une position de transport où les éléments de balayage ne touchent pas le sol,
dans laquelle l'essieu de roues et les axes d'éléments de balayage sont découplés les uns des autres dans la position de transport, de sorte que les éléments de balayage ne sont pas entraînés dans la position de transport,
dans laquelle l'essieu de roues et les axes d'éléments de balayage peuvent être découplés les uns des autres par pivotement des éléments de balayage de la position de fonctionnement à la position de transport,
dans laquelle un accouplement (18) est prévu qui découple l'essieu de roues des axes d'éléments de balayage.

2. Balayeuse selon la revendication 1, **caractérisée en ce que** l'essieu de roues et les axes d'éléments de balayage peuvent être couplés les uns aux autres par pivotement des éléments de balayage de la position de transport à la position de fonctionnement.

3. Balayeuse selon l'une des revendications 1 à 2, **caractérisée en ce que** l'essieu de roues et les axes d'éléments de balayage peuvent être couplés les uns aux autres par le biais d'une transmission, en particulier par le biais d'un entraînement par courroie ou d'un entraînement par chaîne.

4. Balayeuse selon l'une des revendications 1 à 3, **caractérisée en ce que** l'au moins un axe d'élément de balayage est monté dans un élément interne du cadre, lequel est réglable en hauteur par rapport au cadre de telle sorte que l'élément de balayage peut être amené dans une position de transport où l'élément de balayage n'est pas en contact avec la surface du sol.

5. Balayeuse selon la revendication 4, **caractérisée en ce que** l'élément de cadre interne peut pivoter par rapport au cadre autour d'un axe parallèle à l'essieu de roues ou autour de l'essieu de roues.

6. Balayeuse selon l'une des revendications 1 à 5, **caractérisée en ce que** l'au moins un axe d'élément de balayage est couplé cinématiquement à l'essieu de roues dans la position de fonctionnement par le biais d'une transmission, en particulier un entraînement par courroie ou une transmission à chaîne.

7. Procédé de balayage de sols, en particulier de surfaces gazonnées, dans lequel
- une balayeuse est déplacée avec un véhicule tracteur dans une direction de déplacement, dans lequel
- la balayeuse est portée par au moins une roue sur un essieu de roues transversal à la direction de déplacement et la surface est balayée avec au moins deux éléments de balayage sensiblement parallèles à l'essieu de roues et entraînés en rotation chacun autour d'un axe d'élément de balayage, dans lequel un élément de balayage est disposé devant l'essieu de roues dans la direction de déplacement et un élément de balayage est disposé derrière l'essieu de roues dans la direction de déplacement, dans lequel
- dans une position de fonctionnement où les éléments de balayage sont en contact avec le sol, les axes d'éléments de balayage sont couplés à l'essieu de roues et sont entraînés par rotation de l'essieu de roues, dans lequel les éléments de balayage sont pivotés d'une position de fonctionnement à une position de transport où les éléments de balayage ne touchent pas le sol, dans lequel, par le pivotement dans la position de transport, l'essieu de roues et les axes d'éléments de balayage sont découplés les uns des autres par le biais d'un accouplement (18), de sorte que les éléments de balayage ne sont pas entraînés dans la position de transport.

8. Procédé selon la revendication 7, **caractérisé en ce que** l'essieu de roue et l'axe d'élément de balayage sont couplés l'un à l'autre par pivotement de l'élément de balayage de la position de transport à la position de fonctionnement.
